# EUROPÄISCHE PATENTSCHRIFT

(11) **EP 3 232 528 B1**
(45) Veröffentlichungstag und Bekanntmachung des Hinweises auf die Patenterteilung: **22.07.2020**
(21) Anmeldenummer: 16164878.7
(22) Anmeldetag: 12.04.2016
(51) Int. Cl.: H02J 3/14

(54) **VERFAHREN ZUR ANMELDUNG DER VERBRAUCHERLAST IN STROMNETZWERKEN**
METHOD FOR NOTIFICATION OF CONSUMER LOAD IN ELECTRICAL POWER NETWORKS
PROCÉDÉ DE COMMUNICATION DE LA CHARGE DE CONSOMMATION DANS DES RÉSEAUX ÉLÉCTRIQUES

(43) Veröffentlichungstag der Anmeldung: 18.10.2017
(73) Patentinhaber: Deutsche Telekom AG, 53113 Bonn (DE)
(72) Erfinder: HUBER, Michael, 67434 Neustadt a.d.W. (DE)
(74) Vertreter: Braun-Dullaeus Pannen Emmerling Patent- & Rechtsanwaltspartnerschaft mbB

(56) Entgegenhaltungen:
- DE-A1-102012 103 081
- DE-A1-102012 224 128
- DE-A1-102013 212 489
- DE-U1-202007 017 510

## Beschreibung

Die Erfindung betrifft ein Verfahren und ein System zur Lastkontrolle in einem von einem Energieversorger versorgten Stromnetz, über das private Haushalte mit Strom versorgt werden, wobei den Haushalten an das Stromnetz angeschlossene elektrische Geräte zugeordnet sind.

Spitzenlasten im Stromverbrauch stellen Energieversorger und Netzbetreiber vor große Herausforderungen. Während sich die vorhersehbaren Spitzenlasten zwar gut über Mittellastkraftwerke abgefangen lassen, müssen zur Bewältigung unvorhersehbarer Spitzenlasten schnelle und entsprechend teure Spitzenlastkraftwerke eingesetzt werden. Zudem wird Strom zu Spitzenlastzeiten an Strombörsen gehandelt, wo er je nach dem mehrere Euro pro Kilowattstunde kosten kann. Dennoch sind die teuren Spitzenlastkraftwerke notwendig, um bei auftretenden Lastspitzen das Netz zur Verhinderung von "Brownouts" oder "Blackouts" schnell und flexibel stabilisieren zu können.

Insofern ist es für Energieversorger von großem Vorteil, wenn er die Möglichkeit hat, Spitzenlasten aus eigener Kraft auszugleichen. Dazu sind aus dem Stand der Technik entsprechende Vorgehensweisen bekannt. Insbesondere sei auf die DE 10 2012 224 128 A1 hingewiesen, die ein Verfahren offenbart, bei dem Energieversorger die Einschaltzeiten von Strom "fressenden" Haushaltsgeräten, die, wie beispielsweise Wasch- und Geschirrspülmaschinen, einmal gestartete Programme abarbeiten, in gewissem Rahmen beeinflussen und damit einen Ausgleich bewirken können. Dabei wird seitens des Energieversorgers dem Haushaltsgerät ein Einschaltzeitpunkt über ein intelligentes Stromnetz vorgeschlagen. Auf diese Weise ist es möglich, prognostizierte Spitzenlasten zu auszugleichen. Ähnliche Verfahren sind aus der US 2013/0096726 und der DE 10 2012 103 081 A1 bekannt

Nachteil aller bislang bekannten Verfahren, bei dem sich der Energieversorger in die Bestimmung des Einschaltzeitpunktes aktiv einmischt, ist, dass diese sich nur mit großem technischen Aufwand umsetzen lassen. Insbesondere sind zur Steuerung der "Stromfresser" hochkomplexe Schaltungen und fein vernetzte Datenleitungen nötig.

Aufgabe der Erfindung ist es nunmehr, ein Verfahren respektive ein System zur Steuerung der Lastverteilung vorzuschlagen, das sich besonders einfach und mit kostengünstigen Mitteln umsetzen lässt und mit dem ein Energieversorger einen effektiven Lastausgleich bewerkstelligen kann.

Diese Aufgabe wird durch das Verfahren nach Anspruch 1 gelöst. Bevorzugte Ausgestaltungen ergeben sich aus den jeweiligen Unteransprüchen.

Entsprechend der Ansprüche liegt die grundlegende Idee der erfindungsgemäßen Lösung zusammengefasst darin, den Einschaltzeitpunkt eines elektrischen Gerätes beim Energieversorger im Vorhinein anzumelden, damit dieser die von dem elektrischen Gerät zu erwartende Last in seine mittelfristige Planung einbeziehen kann. Erfindungsgemäß weiß der Energieversorger gewissermaßen, was demnächst auf ihn zukommt. Mit dieser einfachen Idee, werden Spitzenlasten für Energieversorger besser plan- und handlebar.

Dabei sei an dieser Stelle angemerkt, dass ein "Energieversorger" nicht zwangsläufig das Energieunternehmen oder der Netzbetreiber selber sein muss. Es können auch Unternehmen sein, die reine organisatorische und/oder administrative Aufgaben bei der Stromversorgung übernehmen.

Anspruchsgemäß wird dem Energieversorger über eine Datenleitung eine Information übermittelt, die beinhaltet, zu welchem späteren Einschaltzeitpunkt das elektrische Gerät einschaltet. Diese Information fließt beim Energieversorger in die Prognose der zu erwartenden Belastung ein. Wichtig ist, dass der "spätere Einschaltzeitpunkt" um eine ausreichend lange Zeitspanne nach der Übermittlung der Information, mithin nach der Voranmeldung, liegt. Damit der Energieversorger ausreichend Möglichkeit zur Erstellung einer ausgleichenden Planung hat, ist es erfindungsgemäss vorgesehen, dass der spätere Zeitpunkt mehr als eine Stunde nach dem Zeitpunkt der Übermittelung der Voranmeldung liegt. Damit hat der Energieversorger die Möglichkeit, seine Kapazitäten an der Belastungsprognose auszurichten und sich im Vorhinein um zusätzliche Kapazitäten, die beispielsweise von Mittellastkraftwerken zur Verfügung gestellt werden, zu kümmern. Diese Vorgehensweise trägt wegen des Wegfalls des teuren Spitzenlastausgleichs zu einer erheblichen Reduzierung der Kosten bei.

Besonders komfortabel ist, dass die Information direkt von dem elektrischen Gerät über eine entsprechende Datenleitung direkt an den Energieversorger übermittelt wird. Beispielsweise kann der Nutzer den Einschaltzeitpunkt am elektrischen Gerät vorgegeben, beispielsweise "Start in zwei Stunden". Das Gerät übermittelt diese Information und startet, sobald der Einschaltzeitpunkt gekommen ist, automatisch. Diese Vorgehensweise ist insofern vorteilhaft, weil viele stromintensive Verbraucher bereits heute die Möglichkeit bieten, den Einschaltzeitpunkt am Gerät vorab zu wählen.

Solche Geräte können auch in ein Smart-Home Netzwerk zur Hausautomation eingebunden werden, das über das Internet Zugang zu einer Webanwendung, insbesondere der Homepage, des Energieversorgers hat. Über das Smart Home Netzwerk und das Internet kann das "intelligente" elektrische Gerät die Information über den Einschaltzeitpunkt direkt an den Energieversorger übermitteln.

Die besonderen Vorteile der erfindungsgemäßen Vorgehensweise liegen darin, dass das Verfahren technisch anspruchslos und daher überaus einfach umzusetzen ist. Zudem arbeitet das Verfahren für den Kunden insofern transparent, als ihm selber keine Kontrolle über den Betrieb seines Gerätes genommen wird. Der Nutzen beim Energieversorger liegt - wie schon gesagt - darin, dass er weniger teure Spitzenlast zukaufen muss.

Wenn die Voranmeldung ein bis zwei Stunden vor dem Einschaltzeitpunkt liegt, verschiebt sich die anfallende Last um diese Dauer. Vorausgesetzt, der Tagesablauf des Verbrauchers, mithin des Kunden, bleibt gleich, kann sich ein Teil der Spitzenlast in die Nebenzeiten verschieben. Damit nimmt der Peak der Spitzenlast ab und wird geglättet. Die Lastentwicklung ist für die Energieversorger besser planbar, so dass auf trägere und kostengünstigere Kraftwerkskapazitäten zurückgegriffen werden kann. Mit der erfindungsgemäßen Verbraucher- Last-Voranmeldung werden Spitzenlastzeiten beim Energieversorger somit besser planbar und damit billiger. Jeder Stromverbrauch führt schließlich nur durch den unvorhergesehenen Zeitpunkt seines Auftretens zur "Spitzenlast". Das Integral des Gesamtverbrauchs bleibt erfindungsgemäß gleich.

Für die Verbrauchsprognose seitens des Energieversorgers ist es ersichtlich vorteilhaft, wenn zusammen mit der Information über den Einschaltzeitpunkt auch noch weitere Betriebsdaten des Gerätes übermittelt werden, aus denen sich insbesondere der zeitliche Verlauf und die Höhe der prognostizierten Stromaufnahme bestimmen lassen. Im einfachsten Falle kann beispielsweise die Leistung des Gerätes und die Dauer des abzuarbeitenden Programmes übermittelt werden.

Um das Verfahren für den Kunden attraktiv zu machen und flächendeckend einführen zu können, ist es vorteilhaft, wenn dem Kunden für die Übermittelung der Information an den Energieversorger eine geldwerte Belohnung zukommt, die ihm beispielsweise über seine Stromrechnung gutgeschrieben wird. Auch andere Kundenincentivierungswerkzeuge, wie PayBack Punkte, bieten sich an.

Da die Voranmeldung für den Energieversorger umso attraktiver ist, je früher er sie bekommt, kann es vorteilhaft sein, wenn die Höhe der Belohnung mit der Dauer zwischen dem Zeitpunkt der Übermittelung der Information und dem Einschaltzeitpunkt korreliert. Beispielsweise könnten für eine Voranmeldung von einer Stunde im Voraus 1 Ct und bei zwei Stunden im Voraus 2 Ct rückvergütet werden.

In einer besonders vorteilhaften weiteren Ausführungsform, führt der Energieversorger eine Liste mit zu erwartenden Spitzenlastzeiten und stellt sie dem Nutzer (Kunden) und/oder dem elektrischen Gerät beispielsweise über die Webanwendung zur Verfügung. In diesem Fall kann der Nutzer respektive das "intelligente" Gerät selber dazu beitragen, dass der Einschaltzeitpunkt in ein Zeitfenster fällt, in dem normalerweise keine Spitzenlast zu erwarten ist. Diese Information kann der Nutzer oder das elektrische Gerät nutzen; er ist jedoch nicht gezwungen, sie zu nutzen.

Um es auch in diesem Fall für den Nutzer attraktiv zu machen, die Information des Energieversorgers zu nutzen, kann wiederum eine geldwerte Belohnung ausgelobt werden. Dabei kann die Höhe der Belohnung davon abhängig gemacht werden, wie weit ein Einschaltzeitpunkt außerhalb der aufgelisteten Spitzenzeiten innerhalb eines lastarmen Zeitfensters gewählt wurde. So kann der Nutzer bewegt werden, seinen Stromfresser außerhalb von Spitzenlastzeiten einzuschalten.

Der Energieversorger kann beispielsweise seine prognostizierten Spitzenlastzeiten täglich auf seine Website "als zu meidende Zeiträume" in Form einer "Blacklist" zum Abruf zur Verfügung stellen. Das stromfressende Gerät lädt sich diese Blacklist über die Datenleitung, insbesondere die Smart-Home-Anbindung, regelmäßig runter und macht dem Nutzer die Blacklist-Zeiträume bei der Voranmeldung seines Stromfressers am Bedienfeld transparent. Wenn der Kunde seine Last-Voranmeldung außerhalb der Blacklist-Zeiträume platziert, kommt ihm eine zusätzliche Bonifikation der beschriebenen Art zu. Diese Ausführungsform nutzt die "Schwarmintelligenz" der Verbraucher, die wegen der Bonifikationsanreize die Verbraucherlast in lastarme Zeitfenster verschieben. In diesem Verfahren steuert der Verbraucher mittelbar und aktiv die Entwicklung der Lastkurve. Der Energieversorger sorgt nur durch das Incentivierungs-Modell dafür, dass der "Schwarm" die Spitzen aus der Lastkurve eliminiert. Damit steuert nicht der Energieversorger die Verbraucherlast, sondern die Schwarmintelligenz der Verbraucher.

Durch die Anmeldung der Stromfresser über eine Smart-Home Umgebung besteht die Möglichkeit, über eine entsprechende auf einem Smartphone laufende Applikation, Transparenz über die Betriebszeitpunkte, generierte Stromverbrauche, Kosten und/oder Bonifikationen der Verbraucher zu schaffen. In einer vorteilhaften Ausführungsform steht dem Nutzer eine solche Applikation zur Darstellung und/oder Analyse seines eigenen Nutzerverhaltens zur Verfügung. Damit kann der Kunde sein Verbrauchsverhalten analysieren und optimieren.

Im Übrigen können über die Smart-Home-Anbindung, insbesondere über die Applikation, die Anmeldung des "Stromfressers" einschließlich der durchschnittlichen Leistungsaufnahme, der voraussichtlichen Dauer, eine Kundenreferenz und eine spätere Startquittierung an den Versorger übermittelt werden.

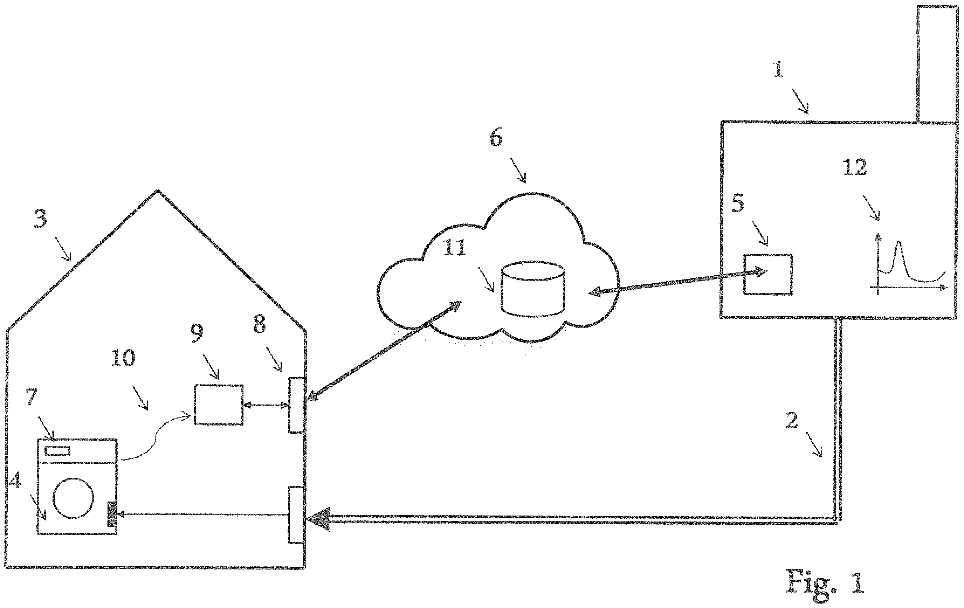

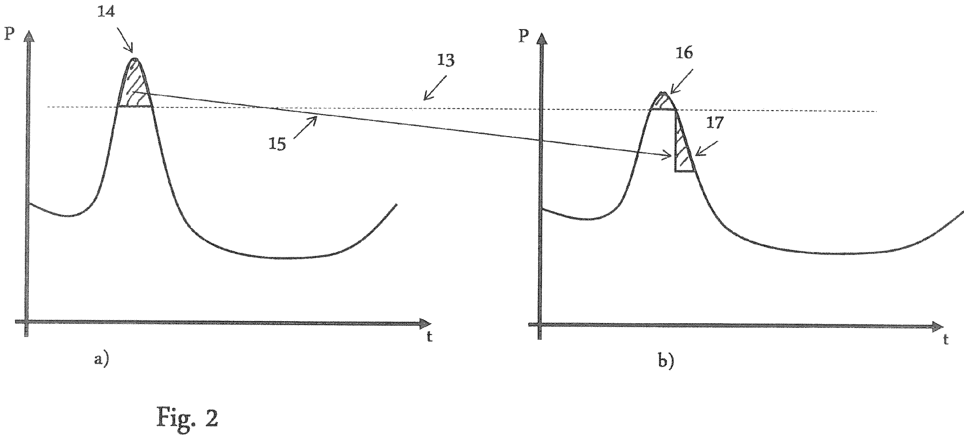

Die Erfindung wird nachfolgend anhand der Figuren 1 und 2 näher beschrieben. Es zeigen:
- **Figur 1**: das System zur Umsetzung des Verfahrens und
- **Figur 2**: eine Darstellung des Lastausgleichs.

Figur 1 zeigt das System zur Durchführung des Verfahrens aufweisend einen Energieversorger 1, der über ein Stromnetz 2 Haushalte 3 versorgt. In dem hier gezeigten Haushalt befindet sich eine Waschmaschine 4, die ihren Strom über das Stromnetz 2 erhält. Der Energieversorger 1 hat mittels eines Routers 5 Zugang zu einer Webanwendung 11 im Internet 6. Zu Beginn des erfindungsgemäßen Verfahrens wird über ein an der Waschmaschine 4 vorgesehenes Bedienfeld einer entsprechenden Steuerelektronik 7 ein Einschaltbefehl vorgegeben.

Auf der anderen Seite hat der Haushalt 3 ebenfalls über einen Router 8 Zugang zu der Webanwendung 11des Energieversorgers 1. Die Steuerelektronik 7 der Waschmaschine 4 kann aus dem Einschaltbefehl des Nutzers eine Information über ihren späteren Einschaltzeitpunkt generieren und drahtlos über die Datenleitung 10 an die Basisstation 9 des haushaltsinternen Smart-Home Netzes senden, von wo aus sie der Webanwendung 11 übermittelt wird. Über den Weg des Smart-Home Netzes und des Internets 6 gelangt die Information über den Einschaltzeitpunkt zusammen mit weiteren planungsrelevanten Informationen der Waschmaschine 4 an die Webanwendung 11. Damit hat der Energieversorger 1 Zugang zu der für ihn relevanten Information und kann sie entsprechend in seiner Planung berücksichtigen. Für diese Planung ist beim Energieversorger eine prognostizierte Lastkurve 12 hinterlegt.

Eine solche Lastkurve und ihre Entwicklung ist in Figur 2 gezeigt: Dabei ist die Leistung P des Energieversorgers über die Zeit t aufgetragen. Die gestrichelte Linie 13 stellt die maximale "Normalleistung". Oberhalb der Normalleistung kommt es zu einer in diesem Fall zeitlich begrenzten Spitzenbelastung (Peak 14) in der Lastkurve a). Unter Anwendung der erfindungsgemäßen Vorgehensweise der Voranmeldung des Stromverbrauchs kann das Integral unter dem Peak 14 abgebaut und in einen unkritischen Bereich verschoben werden (Pfeil 15). Zwar bleibt auch bei der Kurve b) noch eine Spitzenbelastung 16, doch konnte ein Großteil der ursprünglichen Fläche zu der Fläche 17 gewandelt werden.

Da sich der Tagesablauf der Kunden durch das erfindungsgemäße Verfahren statistisch nicht verändert, durch die Voranmeldung und den späteren Start jedoch die Einschaltzeitpunkte verzögern, wird Last aus den Spitzenlastzeiten verlagert. Der Kunde wird beispielsweise wie bisher die Spülmaschine nach dem Abendessen zu Spitzenlastzeiten einräumen, diese jedoch mit Voranmeldung erst 1 - 2h später starten. Eine Glättung der Spitzenlastkurve und eine Reduzierung der Spitzenlastkraftwerkskapazitäten ist die Konsequenz.

## Patentansprüche

1. Verfahren zur Lastkontrolle in einem von einem Energieunternehmen (1) versorgten Stromnetz (2), über das private Haushalte (3) mit Strom versorgt werden, wobei den Haushalten (3) an das Stromnetz (2) angeschlossene elektrische Geräte (4) zugeordnet sind,
**dadurch gekennzeichnet,**
**dass** dem Energieversorger (1) im Vorhinein eine Information über eine Datenleitung übermittelt wird, zu welchem späteren Einschaltzeitpunkt das elektrische Gerät (4) einschaltet, wobei die Information in eine Prognose der Belastung des Energieunternehmens (1) einfließt, wobei die Information von dem elektrischen Gerät (4) übermittelt wird, nachdem von einem Nutzer der Einschaltzeitpunkt am elektrischen Gerät (4) vorgegeben wurde, wobei das elektrische Gerät (4) zum Einschaltzeitpunkt automatisch startet,
wobei der spätere Zeitpunkt mehr als eine Stunde nach dem Zeitpunkt der Übermittelung der Information liegt und
wobei das Energieunternehmen (1) seine Kapazitäten an der von ihm ermittelten Belastungsprognose ausrichtet.

2. Verfahren nach Anspruch 1,
**dadurch gekennzeichnet,**
**dass** das elektrische Gerät (4) in ein Smart Home Netzwerk zur Hausautomation eingebunden ist, das über das Internet (6) Zugang zu einer Webanwendung (11) das Energieunternehmen (1) hat, wobei das elektrische Gerät (4) die Information über das Smart Home Netzwerk an das Energieunternehmen (1) übermittelt.

3. Verfahren nach einem der vorherigen Ansprüche,
**dadurch gekennzeichnet,**
**dass** mit der Information weitere Betriebsdaten übermittelt werden, aus denen sich insbesondere der zeitliche Verlauf und die Höhe der prognostizierten Stromaufnahme bestimmen lassen.

4. Verfahren nach einem der vorherigen Ansprüche,
**dadurch gekennzeichnet,**
**dass** das Energieunternehmen (1) eine Liste mit zu erwartenden Spitzenlastzeiten führt und über die Webanwendung dem Nutzer und/oder dem elektrischen Gerät (4) zur Verfügung stellt.

5. Verfahren nach einem der vorherigen Ansprüche,
**dadurch gekennzeichnet,**
**dass** dem Nutzer für die Übermittelung der Information eine geldwerte Belohnung zukommt, die ihm insbesondere über die Stromrechnung gutgeschrieben wird.

6. Verfahren nach Anspruch 5,
**dadurch gekennzeichnet,**
**dass** die Höhe der Belohnung mit der Dauer zwischen dem Zeitpunkt der Übermittelung der Information und dem Einschaltzeitpunkt korreliert.

7. Verfahren nach Anspruch 5 oder 6,
**dadurch gekennzeichnet,**
**dass** die Höhe der Belohnung davon abhängt, wie weit ein Einschaltzeitpunkt außerhalb der aufgelisteten Spitzenzeiten innerhalb eines lastarmen Zeitfensters gewählt wurde.

## Claims

1. A method for load control in a power supply system (2) supplied by an energy company (1) via which private households (3) are supplied with power, wherein electrical appliances (4) connected to the power supply system (2) are assigned to the households (3),
**characterized in that**
information on the subsequent time at which the electrical appliance (4) will be switched on is conveyed to the energy supplier (1) in advance via a data line,
wherein the information flows into a load forecast of the energy company (1), wherein the information is conveyed from an electrical appliance (4) once the switch-on time has been set on said electrical appliance (4) by a user, wherein the electrical appliance (4) automatically starts at the switch-on time,
wherein the subsequent time is more than one hour after the time at which the information is conveyed and
wherein the energy company (1) bases its capacities on the load forecast which it determines.

2. The method according to claim 1,
**characterized in that**
the electrical appliance (4) is integrated in a smart home network for home automation which has access to a web application (11) of the energy company (1) via the internet (6), wherein the electrical appliance (4) conveys information via the smart home network to the energy company (1).

3. The method according to one of the preceding claims,
**characterized in that**
further operating data are conveyed with the information, from which the time profile and level of forecast power consumption can be determined.

4. The method according to one of the preceding claims,
**characterized in that**
the energy company (1) keeps a list of anticipated peak load times and makes it available to the user and/or the electrical appliance (4) via the web application.

5. The method according to one of the preceding claims,
**characterized in that**
the user receives a remuneration in kind for conveying the information, which remuneration is credited to him in particular via his electricity bill.

6. The method according to claim 5,
**characterized in that**
the level of remuneration correlates with the period between the time at which the information is conveyed and the switch-on time.

7. The method according to claim 5 or 6,
**characterized in that**
the level of remuneration depends on the extent to which a switch-on time has been selected outside the listed peak times within a low-load time frame.

## Revendications

1. Procédé de contrôle de charge dans un réseau électrique (2) alimenté par une compagnie d'énergie (1), par l'intermédiaire duquel des ménages privés (3) sont alimentés en électricité, dans lequel les appareils électriques (4) connectés aux ménages (3) sont affectés au réseau électrique (2),
**caractérisé en ce que**
des informations relatives à une ligne de données sont transmises au fournisseur d'énergie (1) à l'avance, heure à laquelle l'allumage électrique du dispositif électrique (4) s'allume plus tard, dans lequel les informations sont incorporées dans une prévision de la charge de la société d'énergie (1), dans lequel les informations sont transmises par l'appareil électrique (4) après qu'un utilisateur a spécifié l'heure de mise en marche de l'appareil électrique (4), dans lequel l'appareil électrique (4) démarre automatiquement à l'heure de mise en marche,
dans lequel la dernière heure se trouve plus d'une heure après l'heure de la transmission de l'information et
la compagnie d'énergie (1) aligne ses capacités sur la prévision de charge qu'elle a déterminée.

2. Procédé selon la revendication 1,
**caractérisé en ce que**
le dispositif électrique (4) est intégré dans un réseau domestique intelligent pour la domotique, la compagnie d'énergie (1) a accès à une application Web (11) via Internet (6), dans lequel le dispositif électrique (4) transmet les informations à la compagnie d'énergie (1) via le réseau domestique intelligent.

3. Procédé selon une quelconque des revendications précédentes,
**caractérisé en ce que**
les informations de fonctionnement sont transmises avec les informations, d'après lesquelles notamment l'évolution temporelle et le montant de la consommation électrique prédite peuvent être déterminés.

4. Procédé selon une quelconque des revendications précédentes,
**caractérisé en ce que**
la compagnie d'énergie (1) conserve une liste des temps de charge de pointe attendus et la met à la disposition de l'utilisateur et/ou de l'appareil électrique (4) via l'application web.

5. Procédé selon une quelconque des revendications précédentes,
**caractérisé en ce que**
l'utilisateur reçoit une récompense monétaire pour la transmission des informations, qui lui est créditée notamment via la facture d'électricité.

6. Procédé selon la revendication 5,
**caractérisé en ce que**
le montant de la récompense est en corrélation avec la durée entre le moment de la transmission des informations et le moment de l'activation.

7. Procédé selon la revendication 5 ou 6,
**caractérisé en ce que**
le montant de la récompense dépend de la mesure dans laquelle une heure d'allumage a été sélectionnée en dehors des heures de pointe répertoriées dans une fenêtre de temps à faible charge.
